(19) Europäisches Patentamt
European Patent Office
Office européen des brevets

(11) **EP 2 870 414 B1**

(12) **EUROPÄISCHE PATENTSCHRIFT**

(45) Veröffentlichungstag und Bekanntmachung des Hinweises auf die Patenterteilung:
**10.06.2020 Patentblatt 2020/24**

(21) Anmeldenummer: **13733229.2**

(22) Anmeldetag: **02.07.2013**

(51) Int Cl.:
*F24F 11/83* (2018.01)  *F24F 11/00* (2018.01)
*F28F 27/00* (2006.01)  *G05D 23/19* (2006.01)
*F24F 110/10* (2018.01)  *F24F 140/20* (2018.01)

(86) Internationale Anmeldenummer:
**PCT/EP2013/001934**

(87) Internationale Veröffentlichungsnummer:
**WO 2014/008990 (16.01.2014 Gazette 2014/03)**

(54) **VERFAHREN ZUM BETRIEB EINES WÄRMETAUSCHERS SOWIE HVAC-ANLAGE ZUR DURCHFÜHRUNG DES VERFAHRENS**

METHOD FOR OPERATING A HEAT EXCHANGER AND HVAC INSTALLATION FOR IMPLEMENTING THE METHOD

PROCÉDÉ POUR LE FONCTIONNEMENT D'UN ÉCHANGEUR THERMIQUE AINSI QU'INSTALLATION HVAC POUR LA RÉALISATION DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2012 CH 10582012**

(43) Veröffentlichungstag der Anmeldung:
**13.05.2015 Patentblatt 2015/20**

(73) Patentinhaber: **Belimo Holding AG**
**8340 Hinwil (CH)**

(72) Erfinder:
• **FRIEDL, Markus**
**8001 Zürich (CH)**

• **THUILLARD, Marc**
**8707 Uetikon am See (CH)**

(74) Vertreter: **Rentsch Partner AG**
**Bellerivestrasse 203**
**Postfach**
**8034 Zürich (CH)**

(56) Entgegenhaltungen:
EP-A1- 0 035 085      EP-A1- 0 035 085
US-A1- 2006 005 554   US-A1- 2006 005 554
US-A1- 2008 041 559   US-A1- 2008 041 559
US-A1- 2009 090 498   US-A1- 2009 090 498

**Beschreibung**

Die vorliegende Erfindung bezieht sich auf das Gebiet der Klimatechnik. Sie betrifft ein Verfahren zum Betrieb eines Wärmetauschers gemäss dem Oberbegriff des Anspruchs 1. Sie betrifft weiterhin eine HVAC-Anlage zur Durchführung des Verfahrens.

STAND DER TECHNIK

Für die Heizung, Kühlung, Klimatisierung und Lüftung von Räumlichkeiten in Gebäuden werden üblicherweise zentrale Anlagen eingesetzt, die unter dem Begriff HVAC-Anlagen zusammengefasst werden. HVAC steht dabei für Heating, Ventilation und Air Conditioning. Bei derartigen HVAC-Anlagen wird zentral Wärme und/oder Kälte erzeugt und über ein geeignetes Wärmeträgermedium, meist Wasser, zu den entsprechenden Räumlichkeiten geführt, wo die Wärme bzw. Kälte über lokale Wärmetauscher beispielsweise an die dortige Raumluft abgegeben wird.

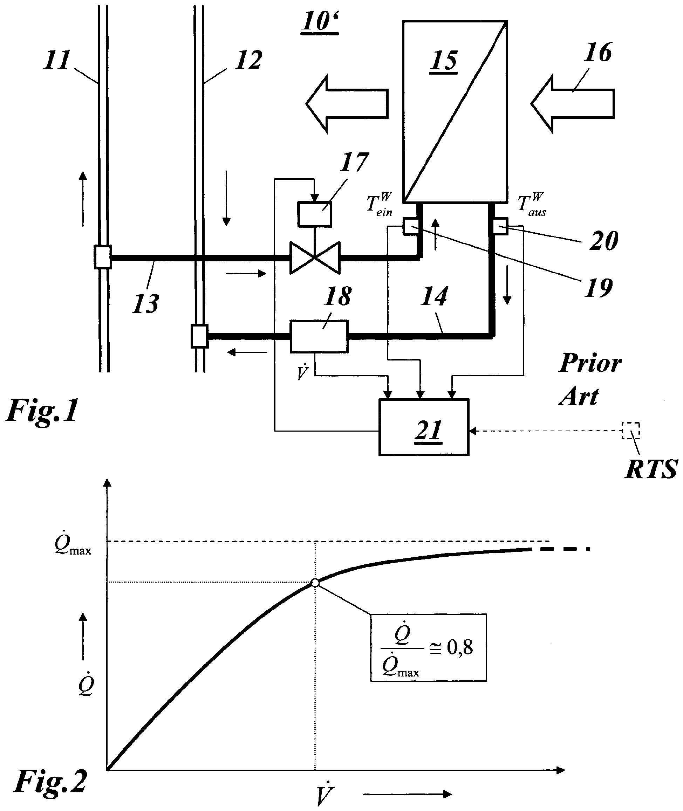

Der zum Erreichen einer vorgegebenen Raumtemperatur benötigte und über den lokalen Wärmetauscher abgegebene bzw. aufgenommene Wärmestrom wird häufig dadurch geregelt, dass der primärseitige Massenstrom des Wärmeträgermediums entsprechend verändert wird. Ein Ausschnitt aus einer beispielhaften HVAC-Anlage ist in Fig. 1 dargestellt. Die HVAC-Anlage 10' der Fig. 1 umfasst einen lokalen Wärmetauscher 15, der primärseitig über eine Vorlauf-Abzweigleitung 13 an eine übergeordnete Vorlaufleitung 11 und über eine Rücklauf-Abzweigleitung 14 an eine übergeordnete Rücklaufleitung 12 angeschlossen ist. Vorlauf Leitung 11 und Rücklaufleitung 12 sind mit einer nicht gezeigten zentralen Einrichtung zur Wärme- und/oder Kälteerzeugung verbunden. Sekundärseitig wird der Wärmetauscher 15 von einem Luftstrom 16 durchströmt, der im Heizungsfall Wärme aufnimmt und dem Kühlungsfall Wärme abgibt. Zur Einstellung des Massenstroms des Wärmeträgermediums durch die Primärseite des Wärmetauschers 15 ist im Beispiel der Fig. 1 in der Vorlauf-Abzweigleitung 13 einen Regelventil 17 angeordnet, dass von einer Steuerung 21 angesteuert wird.

Der im Wärmetauscher 15 an den Luftstrom 16 abgegebene Wärmestrom bestimmt sich aus dem primärseitigen Massenstrom des Wärmeträgermediums, dessen Eintrittstemperatur $T_{ein}^{W}$ am Eingang des Wärmetauschers 15 und dessen Austrittstemperatur $T_{aus}^{W}$ am Ausgang des Wärmetauschers 15 nach der einfachen Beziehung $\dot{Q} = \dot{m} \cdot c_p \cdot (T_{ein}^{W} - T_{aus}^{W})$ mit dem Massenstrom $\dot{m}$ und der spezifischen Wärme $c_p$ des Wärmeträgermediums. Der Massenstrom wird dabei über den entsprechenden Volumenstrom $\dot{V}$ bestimmt, der mit einem beispielsweise in die Rücklauf-Abzweigleitung 14 eingesetzten Durchflussmesser 18 gemessen wird. Die Messung der beiden Temperaturen $T_{ein}^{W}$ und $T_{aus}^{W}$ erfolgt mittels zweier Temperatursensoren 19 und 20, die zweckmässigerweise am primärseitigen Eingang bzw. Ausgang des Wärmetauschers 15 angeordnet sind.

Eine vergleichbare Anordnung ist beispielsweise aus der Druckschrift EP 0 035 085 A1 bekannt, wo sie im Zusammenhang mit einer Verbrauchsmessung eingesetzt wird. Zusätzlich ist dort ein Temperatursensor im zu heizenden/klimatisierenden Raum vorgesehen, der die Zufuhr des Wärmeträgermediums auf der Primärseite des Wärmetauschers steuert. Signalisiert in dieser bekannten Anordnung nun der Raumtemperatursensor (RTS in Fig. 1) einen erhöhten Wärmebedarf, wird (bei gleich bleibender Vorlauftemperatur) das Ventil auf der Primärseite des Wärmetauschers weiter geöffnet, um mehr Wärme bereitzustellen.

Problematisch ist hierbei nun, dass der über den Wärmetauscher übertragene Wärmestrom Q in Abhängigkeit vom primärseitigen Volumenstrom $\dot{V}$ einen Verlauf zeigt, der in Fig. 2 wiedergegeben ist. Der Kurvenverlauf hängt dabei - wie weiter unten noch erläutert wird - einerseits von der Bauweise des Wärmetauschers ab (insbesondere von der Wärmeübertragerfläche A, dem Wärmedurchgangskoeffizienten k, einem Faktor F und einem Exponenten n) und andererseits von der Temperatur, dem Massenstrom und der Wärmekapazität des Mediums auf der Sekundärseite des Wärmetauschers.

Die bei kleinen Volumenströmen zunächst stark ansteigende Kurve flacht mit grösser werdendem Volumenstrom immer stärker ab und nähert sich asymptotisch einem Grenzwert $\dot{Q}_{max}$ (Sättigung). Das Abflachen der Kurve bedeutet, dass für gleiche Zuwächse an Wärmestrom immer grössere Zuwächse an Volumenstrom und damit immer mehr Pumpleistung zur Verfügung gestellt werden muss. Insbesondere steigt die für die Pumpe aufzuwendende Leistung mit der dritten Potenz des Volumenstroms, während sich die übertragene Wärme nur noch wenig erhöht. Dies ist jedoch aus ökonomischer Sicht wenig sinnvoll.

Es ist daher wünschenswert, innerhalb einer derartigen Regelung den Volumenstrom zu begrenzen, wenn ein vorgegebener Wert im Verhältnis $\dfrac{\dot{Q}}{\dot{Q}_{max}}$, dem Sättigungsgrad des Wärmetauschers, erreicht wird. Ein solcher Wert kann beispielsweise bei 0,8 gewählt werden, wie dies in Fig. 2 eingetragen ist. Durch Einführung eines solchen Grenzwertes kann die vom System aufzubringende Pumpleistung begrenzt werden, ohne grosse Einbussen der übertragenen Wärmemenge in Kauf nehmen zu müssen, was zu Vorteilen bei Auslegung und Betrieb der Anlage führt. Es ist andererseits aber auch denkbar, den Luftstrom auf der Sekundärseite des Wärmetauschers zu verändern.

Wie bereits weiter oben erwähnt, können der aktuelle Wärmestrom im Wärmetauscher und damit der Punkt auf der in Fig. 2 gezeigten Kurve durch Messung des Volumenstroms und der primärseitigen Temperaturen bestimmt werden. Die Kurve und ihre Asymptote kann von der Steuerung 21 für bestimmte Bedingungen auf der Sekundärseite des Wärmetauschers nur durch Messungen über einen längeren Zeitraum bestimmt werden. Hierzu wird allerdings ein Durchflussmesser benötigt, der vergleichsweise aufwändig ist und - sofern er bewegliche Teile enthält - auch anfällig für Störungen sein kann.

Es wäre aus diesen Gründen von Vorteil, ein Verfahren zu haben, mit welchem der Sättigungsgrad des Wärmetauschers im Betrieb auf vereinfachte Weise bestimmt und überwacht werden könnte.

Die Druckschrift US 2009/090498 A1 beschreibt andererseits eine Temperaturregelvorrichtung, die die Temperatur von einem ersten Medium durch Wärmeaustausch zwischen dem ersten Medium und einem zweiten Medium über einen Wärmetauscher regelt, eine Belichtungsvorrichtung für Bauelemente mit dieser Temperaturregelvorrichtung und ein Verfahren zur Herstellung von Bauelementen unter Verwendung der Belichtungsvorrichtung.

Wesentlich ist dabei eine Korrekturverarbeitungseinheit, die, basierend auf von einem ersten Temperatursensor, einem zweiten Temperatursensor, einem dritten Temperatursensor und einem vierten Temperatursensor erfassten Temperaturen eine Wärmetauschmenge des Wärmetauschers berechnet, eine logarithmische mittlere Temperaturdifferenz oder eine Durchschnittstemperatur in dem Wärmetauscher berechnet, und die Strömungsrate des zweiten Mediums bestimmt, um einen Gesamtwärmeübertragungskoeffizienten des Wärmetauschers basierend auf der Wärmeaustauschmenge, der berechneten logarithmischen mittlere Temperaturdifferenz oder der Durchschnittstemperatur und der Strömungsrate des zweiten Mediums zu bestimmen, und um eine Verstärkung des Regelbetriebseinheit basierend auf einer Änderung in der Wärmeaustauschmenge mit einer Änderung der Strömungsrate des in den Wärmetauscher zugeführten zweiten Mediums zu korrigieren.

## DARSTELLUNG DER ERFINDUNG

Es ist daher eine Aufgabe der Erfindung, ein Verfahren zum Betrieb eines Wärmetauschers der eingangs genannten Art so auszugestalten, dass auf den Einsatz eines Durchflussmessers verzichtet werden kann.

Es ist weiterhin eine Aufgabe der Erfindung, eine HVAC-Anlage zur Durchführung des Verfahrens anzugeben.

Diese und andere Aufgaben werden durch die Merkmale der Ansprüche 1 und 8 gelöst.

Die Erfindung geht aus von einem Verfahren zum Betrieb eines Wärmetauschers, welcher Wärmetauscher auf einer Primärseite von einem Wärmeträgermedium durchströmt wird, welches mit einer ersten Temperatur in den Wärmetauscher eintritt und mit einer zweiten Temperatur aus dem Wärmetauscher austritt, und auf einer Sekundärseite im Heizungsfall einen Wärmestrom an ein durch den Wärmetauscher strömendes Sekundärmedium abgibt bzw. im Kühlungsfall einen Wärmestrom von dem Sekundärmedium aufnimmt, welches mit einer dritten Temperatur in den Wärmetauscher eintritt und mit einer vierten Temperatur aus dem Wärmetauscher wieder austritt, wobei der Wärmetauscher einen maximalen Wärmestrom übertragen kann.

Sie ist dadurch gekennzeichnet, dass wenigstens drei der vier Temperaturen gemessen werden, und dass aus diesen gemessenen Temperaturen der jeweilige Sättigungsgrad des Wärmetauschers bestimmt und zur Steuerung des Betriebs des Wärmetauschers eingesetzt wird, und dass der Wärmetauscher Teil einer HVAC-Anlage ist.

Eine Ausgestaltung des erfindungsgemässen Verfahrens ist dadurch gekennzeichnet, dass der Strom des Wärmeträgermediums auf der Primärseite des Wärmetauschers steuerbar ist, und dass der Strom des Wärmeträgermediums auf der Primärseite des Wärmetauschers begrenzt wird, wenn der Sättigungsgrad des Wärmetauschers einen vorgegebenen Wert erreicht.

Eine andere Ausgestaltung des erfindungsgemässen Verfahrens ist dadurch gekennzeichnet, dass der Strom des Sekundärmediums auf der Sekundärseite des Wärmetauschers steuerbar ist, und dass der Sättigungsgrad des Wärmetauschers zur Steuerung des Stroms des Sekundärmediums verwendet wird.

Grundsätzlich können auf beiden Seiten des Wärmetauschers (Primärseite und Sekundärseite) je nach Anwendung und Bedarf die unterschiedlichsten Medien wie z.B. Wasser, Luft, Sole, Ice-Slurry oder ähnliche Medien verwendet werden.

Insbesondere kann jedoch das Wärmeträgermedium Wasser sein.

Insbesondere kann jedoch das Sekundärmedium Luft sein.

Gemäss einer weiteren Ausgestaltung der Erfindung werden die erste, zweite und dritte oder vierte Temperatur gemessen, und zur Bestimmung des Sättigungsgrades des Wärmetauschers eine Funktion der Art

$$\frac{\dot{Q}}{\dot{Q}_{\max}} = f(T1, T2, T3) \qquad \frac{\dot{Q}}{\dot{Q}_{\max}} = f(T_{ein}^W, T_{aus}^W, T_{ein}^L)$$

bzw. herangezogen.

Grundsätzlich kann der Wärmetauscher im Rahmen der Erfindung im Gleichstrom, Kreuzstrom oder Gegenstrom oder Mischformen dieser Arten betrieben werden.

Insbesondere wird der Wärmetauscher jedoch im Gegenstrom betrieben, und wird zur Bestimmung des Sättigungsgrades des Wärmetauschers die Funktion

$$\frac{\dot{Q}}{\dot{Q}_{\max}} = 1 - \frac{1}{2} \cdot \frac{T1 - T2}{T1 - T3} \qquad \frac{\dot{Q}}{\dot{Q}_{\max}} = 1 - \frac{1}{2} \cdot \frac{T_{ein}^W - T_{aus}^W}{T_{ein}^W - T_{ein}^L}$$

bzw. herangezogen.

Es ist aber auch denkbar, dass der Wärmetauscher im Gegenstrom betrieben wird, und dass zur Bestimmung des Sättigungsgrades des Wärmetauschers die Funktion

$$\frac{\dot{Q}}{\dot{Q}_{\max}} = 1 - \frac{n}{2 \cdot (\Theta + n \cdot (1 - \Theta))} \cdot \frac{T1 - T2}{T1 - T3}$$

bzw.

$$\frac{\dot{Q}}{\dot{Q}_{\max}} = 1 - \frac{n}{2 \cdot (\Theta + n \cdot (1 - \Theta))} \cdot \frac{T_{ein}^W - T_{aus}^W}{T_{ein}^W - T_{ein}^L}$$

herangezogen wird, wobei n eine vom Wert 1 abweichende Potenz bezeichnet und $\Theta$ eine Konstante ist, die insbesondere den Wert 0,7 aufweist.

Wenn das Sekundärmedium Luft ist, kann im Kühlungsfall zusätzlich der Feuchtigkeitsgehalt der Luft beim Eintritt in den Wärmetauscher gemessen werden, wobei der aus den Temperaturen bestimmte Sättigungsgrad des Wärmetauschers zur Berücksichtigung einer im Wärmetauscher stattfindenden Kondensation entsprechend korrigiert wird.

Eine andere Ausgestaltung des Verfahrens nach der Erfindung ist dadurch gekennzeichnet, dass die Vorlauftemperatur des Wärmeträgermediums erhöht wird, wenn der Sättigungsgrad des Wärmetauschers einen vorgegebenen Wert erreicht.

Die erfindungsgemässe HVAC-Anlage zur Durchführung des Verfahrens nach der Erfindung umfasst einen Wärmetauscher, welcher primärseitig an eine Vorlaufleitung und eine Rücklaufleitung eines mit einem Wärmeträgermedium arbeitenden zentralen Heiz/Kühl-Systems angeschlossen ist und sekundärseitig von einem Sekundärmedium durchströmt wird, umfassend weiterhin ein Steuerungsmittel zur Steuerung des primärseitigen Massenstroms des Wärmeträgermediums und/oder des Sekundärstroms, sowie einen ersten Temperatursensor zur Messung der Einlauftemperatur des in den Wärmetauscher eintretenden Wärmeträgermediums, einen zweiten Temperatursensor zur Messung der Auslauftemperatur des aus dem Wärmetauscher austretenden Wärmeträgermediums, und eine Steuerung, an welche eingangsseitig der erste und zweite Temperatursensor angeschlossen sind, und die ausgangsseitig mit dem Steuerungsmittel verbunden ist.

Sie ist dadurch gekennzeichnet, dass wenigstens ein dritter Temperatursensor zur Messung der Eingangstemperatur und/oder Ausgangstemperatur des in den Wärmetauscher sekundärseitig eintretenden Sekundärmediums vorgesehen ist, dass der dritte Temperatursensor an einen Eingang der Steuerung angeschlossen ist, und dass die Steuerung so ausgelegt ist, dass sie das Steuermittel nach Massgabe der von den wenigstens drei Temperatursensoren gemessenen Temperaturwerte steuert.

Eine Ausgestaltung der erfindungsgemässen HVAC-Anlage ist dadurch gekennzeichnet dass an den Wärmetauscher sekundärseitig ein Verbraucher angeschlossen ist, und dass die Steuerung über eine Bedarfssignalleitung von dem Verbraucher Bedarfssignale empfängt.

Eine weitere Ausgestaltung der erfindungsgemässen HVAC-Anlage ist dadurch gekennzeichnet, dass das Wärmeträgermedium Wasser und das Sekundärmedium Luft ist.

Eine andere Ausgestaltung ist dadurch gekennzeichnet, dass das Steuerungsmittel ein Regelventil ist, welches in eine zur Primärseite des Wärmetauschers führende Vorlauf-Abzweigleitung oder Rücklauf-Abzweigleitung eingebaut ist.

Eine weitere Ausgestaltung ist dadurch gekennzeichnet, dass das Steuerungsmittel ein Gebläse ist, welches in einen zur Sekundärseite des Wärmetauschers führenden Luftkanal eingebaut ist.

Insbesondere ist ein Feuchtesensor zur Messung des Feuchtigkeitsgehalts der in den Wärmetauscher einströmenden Luft vorgesehen, wobei der Feuchtesensor an einen Eingang der Steuerung angeschlossen ist.

Eine weitere Ausgestaltung der HVAC-Anlage nach der Erfindung ist dadurch gekennzeichnet, dass ein Durchflussmesser vorgesehen ist, welcher in eine zur Primärseite des Wärmetauschers führende Vorlauf-Abzweigleitung oder Rücklauf-Abzweigleitung eingebaut ist, und dass der Durchflussmesser an einen Eingang der Steuerung angeschlossen ist.

Eine noch andere Ausgestaltung der HVAC-Anlage nach der Erfindung ist dadurch gekennzeichnet, dass mehrere Wärmetauscher in mehreren Verbraucherkreisen angeordnet sind, dass die Verbraucherkreise von dem zentralen Heiz/Kühlsystem bzw. Energieerzeuger über einen Verteiler mit Energie versorgt werden, dass die Steuerung eine Bedarfsregelung umfasst, und dass die Steuerung über Steuerleitungen mit dem Energieerzeuger und dem Verteiler verbunden ist.

KURZE ERLÄUTERUNG DER FIGUREN

Die Erfindung soll nachfolgend anhand von Ausführungsbeispielen im Zusammenhang mit der Zeichnung näher erläutert werden. Es zeigen:

Fig. 1    einen Ausschnitt aus einer bekannten HVAC-Anlage mit einem Wärmetauscher und herkömmlichen Vorrichtungen zur Bestimmung des abgegebenen Wärmestroms;

Fig. 2    eine beispielhafte Abhängigkeit des von einem Wärmetauscher übertragenen Wärmestroms vom primärseitigen Volumenstrom (diese Abhängigkeit hängt bei jedem Wärmetauscher vom Betriebspunkt des Wärmetauschers ab, insbesondere von den Temperaturen und dem Wärmkapazitätsstrom (Massenstrom mal Wärmekapazität) auf der Sekundärseite);

Fig. 3    in einer zu Fig. 1 vergleichbaren Darstellung eine HVAC-Anlage gemäss einem Ausführungsbeispiel der Erfindung;

Fig. 4    in einer zu Fig. 2 vergleichbaren Darstellung die Korrektur in der Bestimmung des Wärmestroms, wenn mit dem Wärmetauscher auf der Sekundärseite feuchte Luft abgekühlt wird;

Fig. 5    eine prinzipielle Darstellung eines im Gegenstrom betriebenen Wärmetauschers mit den charakteristischen Variablen bzw. Parametern;

Fig. 6    in einer zu Fig. 3 vergleichbaren Darstellung eine HVAC-Anlage gemäss einem anderen Ausführungsbeispiel der Erfindung;

Fig. 7    das Prinzipschaltbild einer beispielhaften HVAC-Anlage mit mehreren Verbraucherkreisen und einer Bedarfsregelung, wie sie zur Anwendung der Erfindung geeignet ist; und

Fig. 8    das Zusammenwirken von Bedarfsregelung und Verbraucherkreis in einer Anlage nach Fig. 7 gemäss einem Ausführungsbeispiel der Erfindung.

WEGE ZUR AUSFÜHRUNG DER ERFINDUNG

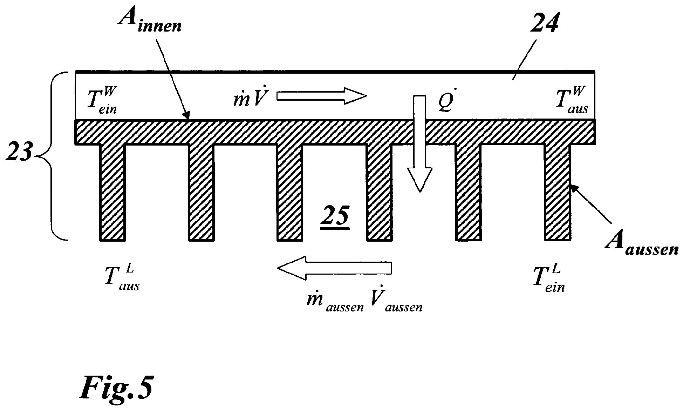

Die vorliegende Erfindung geht von Überlegungen aus, die sich auf einen modellhaften Wärmetauscher beziehen, wie er in Fig. 5 dargestellt ist. Der Wärmetauscher 23 der Fig. 5 überträgt einen Wärmestrom Q von einer Hydraulikseite mit einem Hydraulikkanal 24 zu einer Abgabeseite 25, die beispielsweise zur Vergrösserung der Abgabefläche mit Rippen ausgestattet ist, und die von einem Medium, insbesondere Luft, angeströmt wird.

Wasser tritt mit einer Wassereinlauftemperatur $T_{ein}^{W}$ in den Hydraulikkanal 24 von links ein und tritt mit einer Wasserauslauftemperatur $T_{aus}^{W}$ rechts aus dem Hydraulikkanal 24 wieder aus. Das Wasser durchsetzt den Wärmetauscher 23 mit einem Massenstrom $\dot{m}$ und einem Volumenstrom $\dot{V}$. Für den Übergang des Wärmestroms Q steht dem Hydraulikkanal 24 eine Fläche $A_{innen}$ zur Verfügung. Auf der Abgabeseite 25 strömt das Sekundärmedium (Luft) mit einer eingangsseitigen Lufteingangstemperatur $T_{ein}^{L}$ und einer ausgangsseitigen Luftausgangstemperatur $T_{aus}^{L}$ an einer Fläche $A_{aussen}$ mit einem Massenstrom $\dot{m}_{aussen}$ und einem Volumenstrom $\dot{V}_{aussen}$ vorbei.

Für den vom Hydraulikkanal 24 zur Abgabeseite 25 fliessenden Wärmestrom Q ergeben sich (für einen stationären Zustand) die folgenden Gleichungen:

$$(1) \quad \dot{Q} = \dot{m} \cdot c_p \cdot (T_{ein}^W - T_{aus}^W)$$

mit der Wärmekapazität $c_p$ auf der Hydraulikseite (Wasser).

$$(2) \quad \dot{Q} = \dot{m}_{aussen} \cdot c_{p,aussen} \cdot (T_{ein}^L - T_{aus}^L)$$

mit der Wärmekapazität $c_{p,aussen}$ auf der Abgabeseite (Luft).

$$(3) \quad \dot{Q} = \frac{k \cdot A_{innen}}{K^{n-1}} \cdot (\Delta T)^n \quad \text{(K=Einheit Kelvin)}$$

mit einer Wärmedurchgangszahl k gemäss der folgenden bekannten Gleichung

$$(4) \quad k = \frac{1}{\dfrac{1}{\alpha_{innen}} + \dfrac{s \cdot A_{innen}}{\lambda \cdot A_{Material}} + \dfrac{A_{innen}}{\alpha_{aussen} \cdot A_{aussen}}} \,,$$

einem $\Delta T$ gemäss der folgenden bekannten Gleichung (logarithmisches Mittel)

$$(5) \quad \Delta T = F \cdot \frac{(T_{ein}^W - T_{aus}^L) - (T_{aus}^W - T_{ein}^L)}{\ln\left(\dfrac{T_{ein}^W - T_{aus}^L}{T_{aus}^W - T_{ein}^L}\right)} \approx F \cdot \frac{T_{ein}^W + T_{aus}^W - T_{ein}^L - T_{aus}^L}{2} \quad \text{(F=Korrekturfaktor}$$

zur Berücksichtigung der Art des Wärmetauschers, d.h. Gleichstrom, Kreuzstrom etc.), und einer zu bestimmenden Potenz n.

Aus diesen Gleichungen ergibt sich für den Fall n=1 für den Wärmestrom $\dot{Q}$:

$$(6) \quad \dot{Q} = \frac{T_{ein}^W - T_{ein}^L}{\dfrac{1}{k \cdot A \cdot F} + \dfrac{1}{2 \cdot \dot{V} \cdot \rho \cdot c_p} + \dfrac{1}{2 \cdot \dot{V}_{aussen} \cdot \rho_{aussen} \cdot c_{p,aussen}}}$$

und den für grosse Volumenströme $\dot{V}$ asymptotisch erreichten Maximalwert $\dot{Q}_{max}$:

$$(7) \quad \dot{Q}_{max} = \frac{T_{ein}^W - T_{ein}^L}{\dfrac{1}{k \cdot A \cdot F} + \dfrac{1}{2 \cdot \dot{V}_{aussen} \cdot \rho_{aussen} \cdot c_{p,aussen}}} \,.$$

Für den vereinfachten Fall mit n=1 ergibt sich für das Verhältnis $\dot{Q}/\dot{Q}_{max}$, d.h. für den Anteil der erreichten Sättigung oder den Sättigungsgrad des Wärmetauschers, die folgende einfache Beziehung:

$$(8) \quad \frac{\dot{Q}}{\dot{Q}_{max}} = 1 - \frac{1}{2} \cdot \frac{T_{ein}^W - T_{aus}^W}{T_{ein}^W - T_{ein}^L} = f_1(T_{ein}^W, T_{aus}^W, T_{ein}^L) \,.$$

Für einen verallgemeinerten Fall mit allgemeinem n und linearisierter Gleichung (3) gilt:

$$(9) \quad \frac{\dot{Q}}{\dot{Q}_{max}} = 1 - \frac{n}{2 \cdot (\Theta + n \cdot (1 - \Theta))} \cdot \frac{T_{ein}^{W} - T_{aus}^{W}}{T_{ein}^{W} - T_{ein}^{L}} = f_2(T_{ein}^{W}, T_{aus}^{W}, T_{ein}^{L}),$$

mit der dimensionslosen mittleren Temperaturdifferenz $\Theta$ zur Beschreibung der bei der Linearisierung verwendeten Taylorreihe, die mit dem konstanten Wert $\Theta = 0,7$ eine gute Genauigkeit liefert.

Die beiden Gleichungen (8) und (9) können entsprechend durch einen einzelne Gleichung der Form

$$(10) \quad \frac{\dot{Q}}{\dot{Q}_{max}} = 1 - B \frac{T_{ein}^{W} - T_{aus}^{W}}{T_{ein}^{W} - T_{ein}^{L}}$$

ersetzt werden, wobei B von der Art (nicht jedoch von der Grösse) des Wärmetauschers abhängt. Bei einem reinen Gegenstromwärmetauscher ist B=1/2 (siehe Gleichung (8)), bei einem anderen Wärmetauscher kann B bestimmt werden mit

$$(11) \quad B = \frac{n}{2 \cdot (\Theta + n \cdot (1 - \Theta))}$$

Wesentlich bei diesem Ergebnis ist, dass der Sättigungsgrad des Wärmetauschers unter bestimmten Umständen eine Funktion von drei vergleichsweise einfach zu messenden Temperaturen, im vorliegenden Fall $T_{ein}^{W}$, $T_{aus}^{W}$, $T_{ein}^{L}$, ist. Soll daher bei einer HVAC-Anlage die Regelung dahingehend begrenzt werden, dass beim Erreichen eines vorgegebenen Sättigungsgrades $\dot{Q}/\dot{Q}_{max}$ (von z.B. 0,8) im Wärmetauscher der Volumenstrom auf der Primärseite des Wärmetauschers begrenzt wird, kann dies - wenn die funktionelle Abhängigkeit des Sättigungsgrades von den Temperaturen bekannt ist - aufgrund einer einfachen Messung dreier Temperaturen (am primärseitigen Ein- und Ausgang und am sekundärseitigen Eingang) des Wärmetauschers geschehen. Ist der Sättigungsgrad bekannt, kann dann aus einer (bekannten) Kurve gemäss Fig. 2 auch der entsprechende Volumenstrom bestimmt werden. Es kann somit auf den vergleichsweise aufwändigen Einsatz und Einbau eines Durchflussmessers auf der Primärseite des Wärmetauschers verzichtet werden. Gleichwohl kann ein solcher Durchflussmesser optional zur Kalibrierung eingesetzt werden.

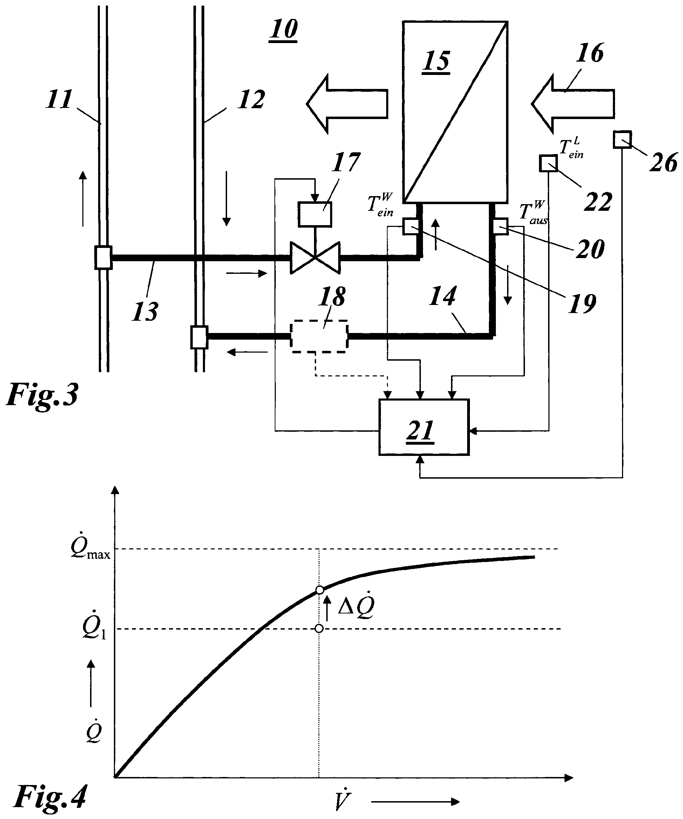

In Fig. 3 ist in einer zu Fig. 1 vergleichbaren Darstellung ein Ausführungsbeispiel einer HVAC-Anlage nach der Erfindung dargestellt. Die HVAC-Anlage 10 der Fig. 3 unterscheidet sich von der HVAC-Anlage 10' der Fig. 1 zunächst in 2 im wesentlichen Dingen: Zum Einen ist der Einsatz eines Durchflussmessers 18 nicht zwingend, sondern lediglich optional, um gegebenenfalls eine Kalibrierung durchführen zu können. Zum Anderen ist am sekundärseitigen Eingang des Wärmetauschers 15 ein dritter Temperatursensor 22 angeordnet, der an einen weiteren Eingang der Steuerung 21 angeschlossen ist. Der dritte Temperatursensor 22 misst im Unterschied zum Raumtemperatursensor 27 in Fig. 1 nicht eine Raumtemperatur, sondern die Lufteingangstemperatur $T_{ein}^{L}$ der in den Wärmetauscher 15 einströmenden Luft (Luftstrom 16). An dieser Stelle sei darauf hingewiesen, dass anstelle des Regelventils 17 selbstverständlich auch eine steuerbare Pumpe oder - wenn das Wärmeträgemedium gasförmig ist - eine Gebläse (oder eine Luftklappe) zur Beeinflussung des Volumenstroms auf der Primärseite eingesetzt werden kann.

Die Steuerung 21 misst mittels der drei Temperatursensoren 19, 20 und 22 die 3 Temperaturen $T_{ein}^{W}$, $T_{aus}^{W}$ und $T_{ein}^{L}$ und bestimmt daraus mittels einer bekannten funktionalen Abhängigkeit $\frac{\dot{Q}}{\dot{Q}_{max}} = f(T_{ein}^{W}, T_{aus}^{W}, T_{ein}^{L})$ den aktuellen Sättigungsgrad $\frac{\dot{Q}}{\dot{Q}_{max}}$ des Wärmemax max tauschers. Überschreitet dieser Sättigungsgrad einen vorgegebenen Grenzwert, der beispielsweise bei 0,8 liegen kann, wird der primärseitige Volumenstrom $\dot{V}$ des Wärmetauschers 15 begrenzt, auch wenn aufgrund einer sich verändernden Raumtemperatur von der Regelung ein grösserer Volumenstrom angefordert wird.

Im einfachsten Fall erfolgt die Bestimmung des Sättigungsgrades nach Massgabe der oben angegebenen Gleichung (8). In anderen Fällen kann die oben angegebene Gleichung (9) besser geeignet sein. Andere funktionelle Abhängigkeiten sind im Rahmen der Erfindung ebenfalls denkbar.

Ist zusätzlich der optionale Durchflussmesser 18 eingebaut, kann der Wärmestrom auf herkömmliche Weise bestimmt werden und so eine angenommene funktionelle Abhängigkeit $\dfrac{\dot{Q}}{\dot{Q}_{max}} = f(T_{ein}^{W}, T_{aus}^{W}, T_{ein}^{L})$ überprüft beziehungsweise kalibriert werden. Insbesondere ist es denkbar, dass ein solcher Durchflussmesser 18 nur bei der Inbetriebnahme einer Anlage eingesetzt und dann beim späteren Betrieb weggelassen wird.

Bei einer anderen Ausgestaltung des erfindungsgemässen Verfahrens wird mit der beschriebenen Methode festgestellt, dass der Wärmetauscher einen vorgegebenen Sättigungsgrad überschritten hat bzw. in der Sättigung ist, also nicht mehr Wärme übertragen kann. In diesem Fall wird dem System gemeldet, dass die Vorlauftemperatur erhöht werden soll. Das kann passieren, indem die Temperatur des zentralen Vorlaufs in der Vorlaufleitung 11 erhöht wird. Bei Schaltungen mit konstantem Volumenstrom sitzt jeweils ein spezielles Ventil an einer Stelle, wo es die Vorlauftemperatur des Verbrauchers regeln kann.

Ein spezieller Fall ergibt sich, wenn mit einer Anlage gemäss Fig. 3 ein Luftstrom 16 abgekühlt werden soll, der Feuchtigkeit enthält, die beim Abkühlen im Wärmetauscher 15 auskondensiert und als Kondenswasser aus dem Wärmetauscher 15 abgeführt werden kann. Dies ist insbesondere in tropischen Gebieten mit hoher Luftfeuchtigkeit der Fall und kann gezielt zur Entfeuchtung der Raumluft eingesetzt werden.

Bei diesem Betriebsfall wird ein Teil der im Wärmetauscher auf die Luft übertragenen Kälte, $\Delta\dot{Q}$, nicht zur Abkühlung der Luft, sondern zur Kondensation der Feuchtigkeit verbraucht. Der gesamthafte Kältestrom ist somit grösser und der Grenzwert für den zugehörigen primärseitigen Volumenstrom wird somit früher erreicht, als der aus den drei Temperaturen bestimmte Wert des Kältestrom für die Abkühlung der Luft ($\dot{Q}_1$ in Fig. 4) erwarten lässt. Soll dies berücksichtigt werden, kann eine Korrektur vorgenommen werden, die den Feuchtigkeitsgehalt der durch den Wärmetauscher 15 strömenden Luft mitberücksichtigt. Hierzu kann gemäss Fig. 3 im Luftstrom 16 ein Feuchtesensor 26 angeordnet werden, der den Feuchtigkeitsgehalt der Luft misst und die Messwerte an die Steuerung 21 überträgt. Die Steuerung 21 ermittelt dann aus den gemessenen Temperaturwerten und dem gemessenen Feuchtigkeitsgehalt den Kältestrom $\Delta\dot{Q}$, der ausschliesslich für die Kondensation benötigt wird und der zu dem für die Abkühlung der Luft benötigten Wert ($\dot{Q}_1$ in Fig. 4) hinzugezählt werden muss, um den korrekten zugehörigen Volumenstrom gemäss der Kurve aus Fig. 4 zu ermitteln. Ein Grenzwert für den Volumenstrom wird somit im Fall der Kondensation früher erreicht als ohne Kondensation.

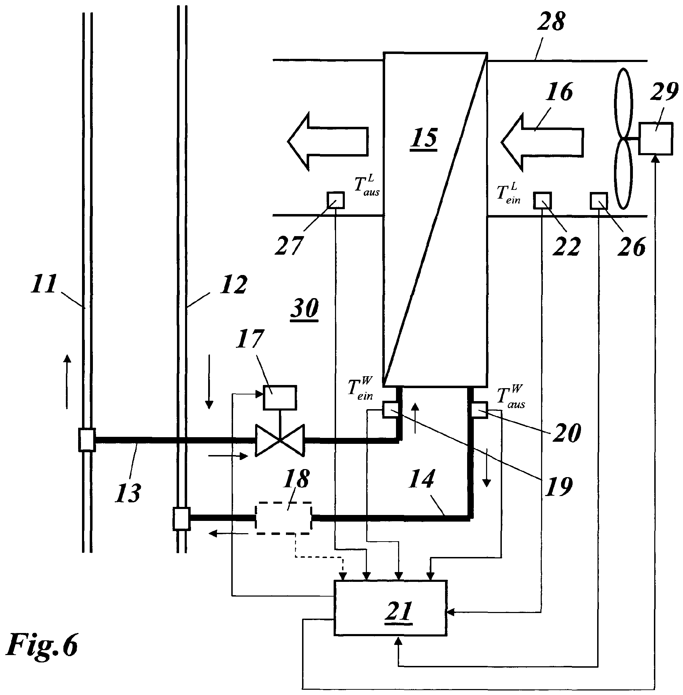

Eine weitere Möglichkeit des Betriebs besteht darin, in einer HVAC-Anlage 30 gemäss Fig. 6 auf der Sekundärseite des Wärmetauschers 15 mittels der Temperatursensoren 22 und 27 die Eingangstemperatur $T_{ein}^{L}$ und Ausgangstemperatur $T_{aus}^{L}$ der Luft im Luftstrom 16 zu messen und (in analoger Weise wie weiter oben beschrieben) aus diesen Messungen im Zusammenhang mit einer primärseitigen Temperaturmessung auf den vom sekundärseitigen Volumenstrom abhängigen Sättigungsgrad des Wärmetauschers 15 und damit auf den sekundärseitigen Volumenstrom zu schliessen (der Wärmetauscher 15 wird dabei gewissermassen in umgekehrter Richtung betrachtet).

Diese Grösse kann dann verwendet werden, um in den sekundärseitigen Volumenstrom des Wärmetauschers 15 regelnd oder begrenzend einzugreifen. Dies kann mittels eines von der Steuerung 21 gesteuerten Gebläses 29 geschehen, das in einem Luftkanal 28 angeordnet ist, der zum Wärmetauscher 15 hin (oder vom Wärmetauscher 15 weg) führt. Anstelle des Gebläses kann als Steuerungsmittel aber auch eine steuerbare Luftklappe vorgesehen werden, oder - wenn das Sekundärmedium beispielsweise flüssig ist - eine Pumpe oder eine Regelventil.

Eine derartige Regelung ist insbesondere dann von Vorteil, wenn - wie dies häufig der Fall ist - bei einer HVAC-Anlage bereits ein Temperatursensor 27 am sekundärseitigen Ausgang des Wärmetauschers 15 eingebaut ist.

Grundsätzlich ist es im Rahmen der Erfindung aber auch denkbar, nur die Temperaturen $T_{ein}^{W}$, $T_{aus}^{W}$ und $T_{aus}^{L}$ zu messen und zur Regelung im Wärmetauscherbetrieb heranzuziehen.

Die vorliegende Erfindung lässt sich mit Vorteil bei HVAC-Anlagen mit einer sogenannten Bedarfsregelung einsetzen, die im Hinblick auf eine gesteigerte Energieeffizienz zunehmend an Bedeutung gewinnen.

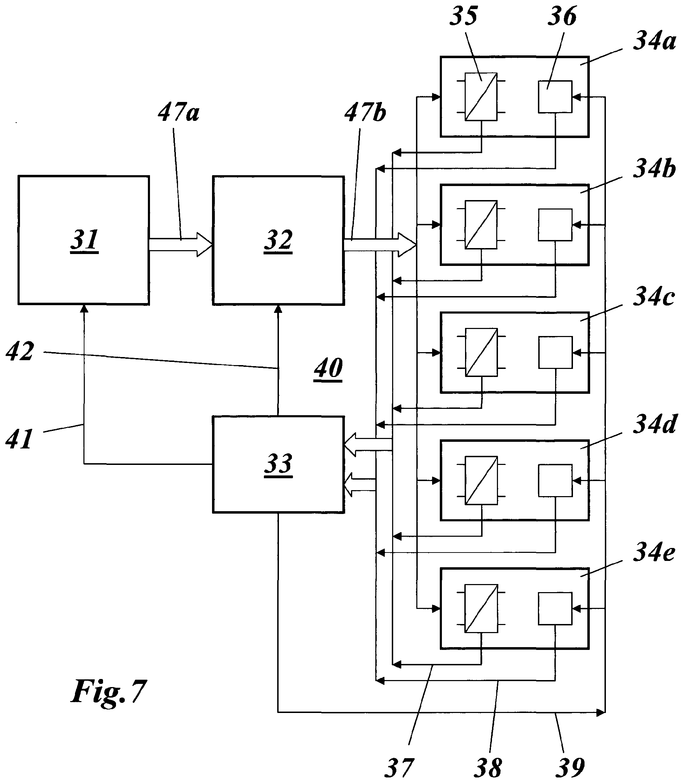

Fig. 7 zeigt in einer schematischen Darstellung den beispielhaften Aufbau einer HVAC-Anlage 40 mit Bedarfsregelung. Die HVAC-Anlage 40 umfasst im Beispiel fünf Verbraucherkreise 34a-e, die von einem zentralen Energieerzeuger 31 über einen Verteiler 32 und die entsprechenden Versorgungsleitungen 47a,b mit Wärme- und/oder Kälteenergie versorgt werden. In den einzelnen Verbraucherkreisen 34a-e ist jeweils ein Wärmetauscher 35 angeordnet, der die zugeführte Energie auf einen Verbraucher 36 überträgt.

Die Bereitstellung der Energie durch den Energieerzeuger 31 und die Verteilung der Energie durch den Verteiler 32 wird von einer Bedarfsregelung 33 über entsprechende Steuerleitungen 41 und 42 gesteuert. Die Bedarfsregelung 33 kann darüber hinaus in den einzelnen Verbraucherkreisen 34a-e auf der Verbraucherseite über entsprechende Steuerleitungen 39 steuernd eingreifen, um beispielsweise den sekundärseitigen Volumenstrom im betreffenden Wärmetauscher 35 zu verändern.

Die Bedarfsregelung 33 erhält aus dem Verbraucherkreisen 34a-e über Bedarfssignalleitungen 38 Bedarfssignale, die dann ausgewertet werden, um die Energieerzeugung und -verteilung so zu steuern, dass der angemeldete Bedarf auf eine Weise gedeckt wird, die nach vorgegebenen Kriterien, z.B. der Energieeffizienz, optimiert ist.

Für diese Optimierung werden Informationen über den jeweiligen Betriebszustand der Wärmetauscher 35 benötigt, nämlich die Eingangs- und Ausgangstemperaturen, der Sättigungsgrad, die primärseitigen und sekundärseitigen Volumenströme und - wenn als Medium Luft eingesetzt wird - der Feuchtegehalt der Luft.

Diese Informationen lassen sich gemäss der Erfindung auf einfache Temperatur- und ggf. Feuchtemessungen zurückführen, ohne dass aufwändige Durchflussmesser eingesetzt werden müssen. Entsprechend werden Temperaturwerte aus dem Wärmetauscher 35 über Temperatursignalleitungen 37 an die Bedarfsregelung 33 übermittelt (eine Signalleitung für die Feuchtigkeitsmessung ist in Fig. 7 nicht extra eingezeichnet).

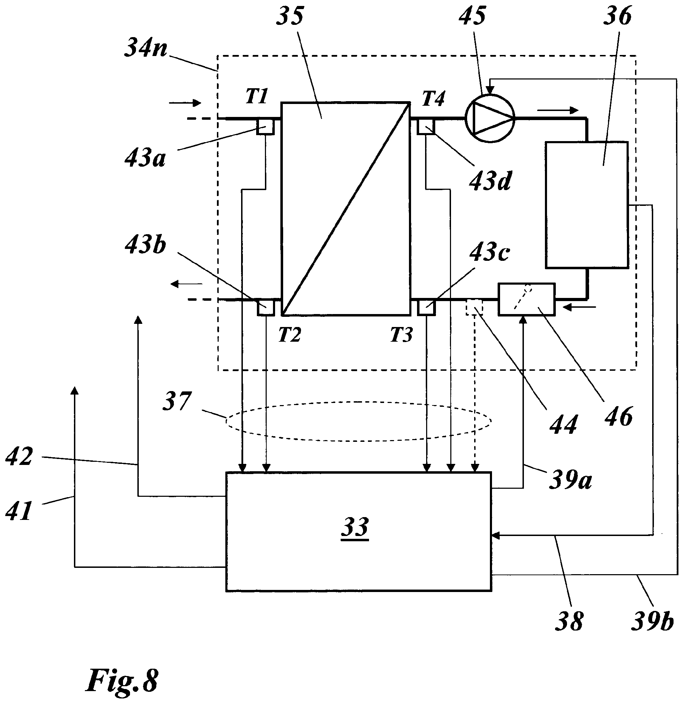

Der Aufbau im einzelnen Verbraucherkreis 34n ist in Fig. 8 dargestellt. Mit den Temperatursensoren 43a-d werden primärseitig und sekundärseitig Eingangs- und Ausgangstemperatur T1, T3 und T2, T4 gemessen, sowie gegebenenfalls mit einem Feuchtesensor 44 die relative Luftfeuchtigkeit. Der auf der Sekundärseite des Wärmetauschers 35 angeordnete Verbraucher 36 wird vom Sekundärmedium durchströmt, welches beispielsweise mit einer Fördervorrichtung 45, einer Pumpe, einem Gebläse oder dergleichen, in einem Kreislauf bewegt wird. Der Volumenstrom des Sekundärmediums kann entweder über die Fördervorrichtung 45 oder über ein separates Regelmittel 46, ein Ventil, eine Klappe oder dergleichen, beeinflusst werden. Aus dem Verbraucher 36 selbst kommt ein Bedarfssignal und wird über die Bedarfssignalleitung 38 an die Bedarfsregelung 33 weitergeleitet.

Aus den gemessenen Temperaturen T1-T4 können gemäss Erfindung der Sättigungsgrad des Wärmetauschers 35 sowie die Volumenströme bestimmt werden. Falls die Optimierung von der Bedarfsregelung 33 einen sekundärseitigen Eingriff erfordert, kann dies mittels der Steuerleitungen 39a,b über die Fördervorrichtung 45 und/oder das Regelmittel 46 erfolgen.

Falls die Optimierung von der Bedarfsregelung 33 einen Eingriff im Verteiler 32 erfordert, kann dies über die Steuerleitung 42 erfolgen. Ein Eingriff beim Energieerzeuger 31 wird über die Steuerleitung 41 durchgeführt. Ein solcher Eingriff kann beispielsweise darin bestehen, die Vorlauftemperatur zu verändern. Es ist aber auch denkbar, die Energieerzeugung insgesamt stufenweise zu verändern, wenn im Energieerzeuger 31 mehrere gleichartige Module (z.B. Kältemaschinen) parallel arbeiten und einzeln angesteuert werden können, wie dies beispielsweise in der Druckschrift US 7,377,450 B2 offenbart ist.


Bezugszeichenliste

10,10',30    HVAC-Anlage
11    Vorlaufleitung
12    Rücklaufleitung
13    Vorlauf-Abzweigleitung
14    Rücklauf-Abzweigleitung
15,23    Wärmetauscher
16    Luftstrom
17    Regelventil
18    Durchflussmesser
19,20    Temperatursensor
21    Steuerung
22,27    Temperatursensor
24    Hydraulikkanal
25    Abgabeseite
26    Feuchtesensor
28    Luftkanal
29    Gebläse (Ventilator)
31    Energieerzeuger (Wärme-/Kälteenergie)
32    Verteiler
33    Bedarfsregelung
34a-e,n    Verbraucherkreis
35    Wärmetauscher
36    Verbraucher
37    Tempератursignalleitung

38      Bedarfssignalleitung
39,41,42      Steuerleitung
39a,b      Steuerleitung
40      HVAC-Anlage
43a-d      Temperatursensor
44      Feuchtesensor
45      Fördervorrichtung (z.B. Pumpe, Gebläse etc.)
46      Regelmittel (z.B. Ventil, Klappe etc.)
47a,b      Versorgungsleitung
RTS      Raumtemperatursensor
$\dot{Q}$      Wärmestrom
$\dot{Q}_{max}$      max. Wärmestrom (bei Sättigung)
$\Delta\dot{Q}$      Kondensationskältestrom
$\dot{V}$      Volumenstrom (Wasser)

$T_{ein}^{W}$      Wassereinlauftemperatur

$T_{aus}^{W}$      Wasserauslauftemperatur

$T_{ein}^{L}$      Lufteingangstemperatur

$T_{aus}^{L}$      Luftausgangstemperatur

T1-T4      Temperatur

**Patentansprüche**

1.  Verfahren zum Betrieb eines Wärmetauschers (15), welcher Wärmetauscher (15) auf einer Primärseite von einem Wärmeträgermedium durchströmt wird, welches mit einer ersten Temperatur (T1, $T_{ein}^{W}$ ) in den Wärmetauscher (15) eintritt und mit einer zweiten Temperatur (T2, $T_{aus}^{W}$ ) aus dem Wärmetauscher (15) austritt, und auf einer Sekundärseite im Heizungsfall einen Wärmestrom (Q) an ein durch den Wärmetauscher (15) strömendes Sekundärmedium abgibt bzw. im Kühlungsfall einen Wärmestrom ($\dot{Q}$) von dem Sekundärmedium aufnimmt, welches mit einer dritten Temperatur (T3, $T_{ein}^{L}$ ) in den Wärmetauscher (15) eintritt und mit einer vierten Temperatur (T4, $T_{aus}^{L}$ ) aus dem Wärmetauscher (15) wieder austritt, wobei der Wärmetauscher (15) einen maximalen Wärmestrom ($\dot{Q}_{max}$) übertragen kann, wobei wenigstens drei der vier Temperaturen (T1-T4, $T_{ein}^{W}$ , $T_{aus}^{W}$ , $T_{ein}^{L}$ , $T_{aus}^{L}$ ) gemessen werden, **dadurch gekennzeichnet, dass** aus diesen gemessenen Temperaturen der jeweilige Sättigungsgrad ($\frac{\dot{Q}}{\dot{Q}_{max}}$) des Wärmetauschers (15) bestimmt und zur Steuerung des Betriebs des Wärmetauschers (15) eingesetzt wird, und dass der Wärmetauscher (15) Teil einer HVAC-Anlage (10) ist, wobei der Strom des Wärmeträgermediums auf der Primärseite des Wärmetauschers (15) begrenzt wird, wenn der Sättigungsgrad ($\frac{\dot{Q}}{\dot{Q}_{max}}$) des Wärmetauschers (15) einen vorgegebenen Wert erreicht, oder der Sättigungsgrad ($\frac{Q}{\dot{Q}_{max}}$) des Wärmetauschers (15) zur Steuerung des Stroms des Sekundärmediums verwendet wird, oder die Vorlauftemperatur ($T_1$, $T^w_{ein}$) des Wärmeträgermediums erhöht wird, wenn der Sättigungsgrad des Wärmetauschers (15) einen vorgegebenen Wert erreicht.

2.  Verfahren nach dem Anspruch 1, **dadurch gekennzeichnet, dass** das Wärmeträgermedium Wasser ist.

3.  Verfahren nach einem der Ansprüche 1-2, **dadurch gekennzeichnet, dass** das Sekundärmedium Luft ist.

4. Verfahren nach einem der Ansprüche 1-3, **dadurch gekennzeichnet, dass** die erste, zweite und dritte oder vierte Temperatur (T1, T2, T3 oder T4; $T_{ein}^{W}$, $T_{aus}^{W}$, $T_{ein}^{L}$ oder $T_{aus}^{L}$ ) gemessen werden, und dass zur Bestimmung des Sättigungsgrades $(\frac{\dot{Q}}{\dot{Q}_{max}})$ des Wärmetauschers (15) eine Funktion der Art $\frac{\dot{Q}}{\dot{Q}_{max}} = f(T1, T2, T3, T4)$ bzw.

$$\frac{\dot{Q}}{\dot{Q}_{max}} = f(T_{ein}^{W}, T_{aus}^{W}, T_{ein/aus}^{L})$$ herangezogen wird.

5. Verfahren nach Anspruch 4, **dadurch gekennzeichnet, dass** der Wärmetauscher im Gegenstrom betrieben wird, und dass zur Bestimmung des Sättigungsgrades $(\frac{\dot{Q}}{\dot{Q}_{max}})$ des Wärmetauschers (15) die Funktion

$$\frac{\dot{Q}}{\dot{Q}_{max}} = 1 - \frac{1}{2} \cdot \frac{T1 - T2}{T1 - T3}$$ bzw. $$\frac{\dot{Q}}{\dot{Q}_{max}} = 1 - \frac{1}{2} \cdot \frac{T_{ein}^{W} - T_{aus}^{W}}{T_{ein}^{W} - T_{ein}^{L}}$$ herangezogen wird.

6. Verfahren nach Anspruch 4, **dadurch gekennzeichnet, dass** der Wärmetauscher im Gegenstrom betrieben wird, und dass zur Bestimmung des Sättigungsgrades $(\frac{\dot{Q}}{\dot{Q}_{max}})$ des Wärmetauschers (15) die Funktion

$$\frac{\dot{Q}}{\dot{Q}_{max}} = 1 - \frac{n}{2 \cdot (\Theta + n \cdot (1 - \Theta))} \cdot \frac{T1 - T2}{T1 - T3}$$ bzw. $$\frac{\dot{Q}}{\dot{Q}_{max}} = 1 - \frac{n}{2 \cdot (\Theta + n \cdot (1 - \Theta))} \cdot \frac{T_{ein}^{W} - T_{aus}^{W}}{T_{ein}^{W} - T_{ein}^{L}}$$ herangezogen wird, wobei n eine vom Wert 1 abweichende Potenz bezeichnet und $\Theta$ eine Konstante ist, die insbesondere den Wert 0,7 aufweist.

7. Verfahren nach Anspruch 2, **dadurch gekennzeichnet, dass** im Kühlungsfall zusätzlich der Feuchtigkeitsgehalt der Luft beim Eintritt in den Wärmetauscher (15) gemessen wird, und dass der aus den Temperaturen (T1, T2, T3 bzw. T4; $T_{ein}^{W}$, $T_{aus}^{W}$, $T_{ein}^{L}$ bzw. $T_{aus}^{L}$ ) bestimmte Sättigungsgrad $(\frac{\dot{Q}}{\dot{Q}_{max}})$ des Wärmetauschers (15) zur Berücksichtigung einer im Wärmetauscher (15) stattfindenden Kondensation entsprechend korrigiert wird.

8. HVAC-Anlage (10, 30, 40) zur Durchführung des Verfahrens nach einem der Ansprüche 1-7, umfassend wenigstens einen Wärmetauscher (15, 35), welcher primärseitig an eine Vorlaufleitung (11) und eine Rücklaufleitung (12) eines mit einem Wärmeträgermedium arbeitenden zentralen Heiz/Kühl-Systems (31) angeschlossen ist und sekundärseitig von einem Sekundärmedium durchströmt wird, umfassend weiterhin ein Steuerungsmittel (17, 29, 45, 46) zur Steuerung des primärseitigen Massenstroms des Wärmeträgermediums und/oder des Sekundärstroms, sowie einen ersten Temperatursensor (19, 43a) zur Messung der Einlauftemperatur (T1, $T_{ein}^{W}$ ) des in den Wärmetauscher (15, 35) eintretenden Wärmeträgermediums, einen zweiten Temperatursensor (20, 43b) zur Messung der Auslauftemperatur (T2, $T_{aus}^{W}$ ) des aus dem Wärmetauscher (15, 35) austretenden Wärmeträgermediums, und eine Steuerung (21, 33), an welche eingangsseitig der erste und zweite Temperatursensor (19, 20, 43a, 43b) angeschlossen sind, und die ausgangsseitig mit dem Steuerungsmittel (17, 29, 45, 46) verbunden ist, **dadurch gekennzeichnet, dass** wenigstens ein dritter Temperatursensor (22, 27, 43c, 43d) zur Messung der Eingangstemperatur (T3, $T_{ein}^{L}$ ) und/oder Ausgangstemperatur (T4, $T_{aus}^{L}$ ) des in den Wärmetauscher (15, 35) sekundärseitig eintretenden Sekundärmediums vorgesehen ist, dass der dritte Temperatursensor (22, 27, 43c, 43d) an einen Eingang der Steuerung (21, 33) angeschlossen ist, und dass die Steuerung (21, 33) so ausgelegt ist, dass sie das Steuermittel (17, 29, 45, 46) nach Massgabe der von den wenigstens drei Temperatursensoren (19, 20, 22 bzw. 27; 43a-d) gemessenen Temperaturwerte steuert.

9. HVAC-Anlage nach Anspruch 8, **dadurch gekennzeichnet, dass** an den Wärmetauscher (15, 35) sekundärseitig ein Verbraucher (36) angeschlossen ist, und dass die Steuerung (33) über eine Bedarfssignalleitung (38) von dem Verbraucher (36) Bedarfssignale empfängt.

10. HVAC-Anlage nach Anspruch 8 oder 9, **dadurch gekennzeichnet, dass** das Wärmeträgermedium Wasser und das Sekundärmedium Luft ist.

11. HVAC-Anlage nach einem der Ansprüche 8-10, **dadurch gekennzeichnet, dass** das Steuerungsmittel ein Regelventil (17) ist, welches in eine zur Primärseite des Wärmetauschers (15) führende Vorlauf-Abzweigleitung (13) oder Rücklauf-Abzweigleitung (14) eingebaut ist.

12. HVAC-Anlage nach Anspruch 10, **dadurch gekennzeichnet, dass** das Steuerungsmittel ein Gebläse (29) ist, welches in einen zur Sekundärseite des Wärmetauschers (15) führenden Luftkanal (28) eingebaut ist.

13. HVAC-Anlage nach Anspruch 10, **dadurch gekennzeichnet, dass** ein Feuchtesensor (26, 44) zur Messung des Feuchtigkeitsgehalts der in den Wärmetauscher (15, 35) einströmenden Luft vorgesehen ist, und dass der Feuchtesensor (26, 44) an einen Eingang der Steuerung (21, 33) angeschlossen ist.

14. HVAC-Anlage nach einem der Ansprüche 8-13, **dadurch gekennzeichnet, dass** ein Durchflussmesser (18) vorgesehen ist, welcher in eine zur Primärseite des Wärmetauschers (15) führende Vorlauf-Abzweigleitung (13) oder Rücklauf-Abzweigleitung (14) eingebaut ist, und dass der Durchflussmesser (18) an einen Eingang der Steuerung (21) angeschlossen ist.

15. HVAC-Anlage (40) nach Anspruch 8, **dadurch gekennzeichnet, dass** mehrere Wärmetauscher (35) in mehreren Verbraucherkreisen (34a-e) angeordnet sind, dass die Verbraucherkreise (34a-e) von dem zentralen Heiz/Kühlsystem bzw. Energieerzeuger (31) über einen Verteiler (32) mit Energie versorgt werden, dass die Steuerung (33) eine Bedarfsregelung umfasst, und dass die Steuerung (33) über Steuerleitungen (41, 42) mit dem Energieerzeuger (31) und dem Verteiler (32) verbunden ist.

## Claims

1. Method for operating a heat exchanger (15), a heat transfer medium flowing through this heat exchanger (15) on a primary side and entering the heat exchanger (15) at a first temperature (**T1,** $T_{in}^W$ ) and exiting the heat exchanger (15) at a second temperature (**T2,** $T_{out}^W$ **),** which heat exchanger, on a secondary side, emits a heat flow ($\dot{Q}$) to a secondary medium flowing through the heat exchanger (15) in the case of heating or absorbs a heat flow ($\dot{Q}$) from the secondary medium in the case of cooling, which secondary medium enters the heat exchanger (15) at a third temperature (**T3,** $T_{in}^L$ ) and exits the heat exchanger (15) again at a fourth temperature (**T4,** $T_{out}^L$ **),** wherein the heat exchanger (15) can transfer a maximum heat flow ($\dot{Q}_{max}$), wherein at least three of the four temperatures (**T1 - T4,** $T_{in}^W$, $T_{out}^W$, $T_{in}^L$, $T_{out}^L$ ) are measured, **characterized in that** the respective degree of saturation ($\frac{\dot{Q}}{\dot{Q}_{max}}$) of the heat exchanger (15) is determined from these measured temperatures and is used to control the operation of the heat exchanger (15), and **in that** the heat exchanger (15) is part of an HVAC system (10), wherein the flow of the heat transfer medium on the primary side of the heat exchanger (15) is limited when the degree of saturation ($\frac{\dot{Q}}{\dot{Q}_{max}}$) of the heat exchanger (15) reaches a prespecified value, or the degree of saturation ($\frac{\dot{Q}}{\dot{Q}_{max}}$) of the heat exchanger (15) is used for controlling the flow of the secondary medium, or the inflow temperature (**T1,** $T_{in}^W$ ) of the heat transfer medium is increased when the degree of saturation of the heat exchanger (15) reaches a prespecified value.

2. Method according to Claim 1, **characterized in that** the heat transfer medium is water.

3. Method according to either of Claims 1 and 2, **characterized in that** the secondary medium is air.

4. Method according to one of Claims 1-3, **characterized in that** the first, second and third or fourth temperature (**T1, T2, T3 or T4;** $T_{in}^W$, $T_{out}^W$, $T_{in}^L$ or $T_{out}^L$ ) are measured, and **in that** a function of the type

$$\frac{\dot{Q}}{\dot{Q}_{max}} = f(T1, T2, T3, T4) \quad \text{or} \quad \frac{\dot{Q}}{\dot{Q}_{max}} = f(T_{in}^W, T_{out}^W, T_{in/out}^L)$$ is used for determining the degree of

saturation $\left(\frac{\dot{Q}}{\dot{Q}_{max}}\right)$ of the heat exchanger (15).

5. Method according to Claim 4, **characterized in that** the heat exchanger is operated in countercurrent mode, and **in that** the function $\dfrac{\dot{Q}}{\dot{Q}_{max}} = 1 - \dfrac{1}{2} \cdot \dfrac{T1-T2}{T1-T3}$ or $\dfrac{\dot{Q}}{\dot{Q}_{max}} = 1 - \dfrac{1}{2} \cdot \dfrac{T_{in}^W - T_{out}^W}{T_{in}^W - T_{in}^L}$ is used for determining the degree of saturation $\left(\frac{\dot{Q}}{\dot{Q}_{max}}\right)$ of the heat exchanger (15).

6. Method according to Claim 4, **characterized in that** the heat exchanger is operated in countercurrent mode, and **in that** the function $\dfrac{\dot{Q}}{\dot{Q}_{max}} = 1 - \dfrac{n}{2 \cdot (\Theta + n \cdot (1-\Theta))} \cdot \dfrac{T1-T2}{T1-T3}$ or $\dfrac{\dot{Q}}{\dot{Q}_{max}} = 1 - \dfrac{n}{2 \cdot (\Theta + n \cdot (1-\Theta))} \cdot \dfrac{T_{in}^W - T_{out}^W}{T_{in}^W - T_{in}^L}$ is used for determining the degree of saturation $\left(\frac{\dot{Q}}{\dot{Q}_{max}}\right)$ of the heat exchanger (15), where n denotes a potency which differs from the value 1 and $\Theta$ is a constant which has, in particular, the value 0.7.

7. Method according to Claim 2, **characterized in that**, in the event of cooling, the moisture content of the air when entering the heat exchanger (15) is additionally measured, and **in that** the degree of saturation $\left(\frac{\dot{Q}}{\dot{Q}_{max}}\right)$ of the heat exchanger (15) which is determined from the temperatures (**T1, T2, T3 or T4;** $T_{in}^W$, $T_{out}^W$, $T_{in}^L$ or $T_{out}^L$ ) is correspondingly corrected for taking into account condensation taking place in the heat exchanger (15).

8. HVAC system (10, 30, 40) for carrying out the method according to one of Claims 1-7, including at least one heat exchanger (15, 35) which, on the primary side, is connected to an inflow line (11) and a return line (12) of a central heating/cooling system (31) operating with a heat transfer medium and through which a secondary medium flows on a secondary side, further including a control means (17, 29, 45, 46) for controlling the mass flow of the heat transfer medium on the primary side and/or the secondary flow, and also a first temperature sensor (19, 43a) for measuring the inflow temperature (**T1,** $T_{in}^W$ ) of the heat transfer medium entering the heat exchanger (15, 35), a second temperature sensor (20, 43b) for measuring the outlet temperature (**T2,** $T_{out}^W$ ) of the heat transfer medium exiting the heat exchanger (15, 35), and a controller (21, 33) to which, on the input side, the first and the second temperature sensor (19, 20, 43a, 43b) are connected and which, on the output side, is connected to the control means (17, 29, 45, 46), **characterized in that** at least one third temperature sensor (22, 27, 43c, 43d) is provided for measuring the input temperature (**T3,** $T_{in}^L$ ) and/or output temperature (**T4,** $T_{out}^L$ ) of the secondary medium entering the heat exchanger (15, 35) on the secondary side, **in that** the third temperature sensor (22, 27, 43c, 43d) is connected to an input of the controller (21, 23), and **in that** the controller (21, 33) is designed such that it controls the control means (17, 29, 45, 46) in accordance with the temperature values measured by the at least three temperature sensors (19, 20, 22 or 27; 43a-d).

9. HVAC system according to Claim 8, **characterized in that** a consumer (36) is connected to the heat exchanger (15, 35) on the secondary side, and **in that** the controller (33) receives demand signals from the consumer (36) via a demand signal line (38).

10. HVAC system according to Claim 8 or 9, **characterized in that** the heat transfer medium is water and the secondary medium is air.

11. HVAC system according to one of Claims 8-10, **characterized in that** the control means is a regulating valve (17) which is incorporated into an inflow branch line (13) or return branch line (14) leading to the primary side of the heat exchanger (15).

12. HVAC system according to Claim 10, **characterized in that** the control means is a fan (29) which is incorporated into an air duct (28) which leads to the secondary side of the heat exchanger (15).

13. HVAC system according to Claim 10, **characterized in that** a moisture sensor (26, 44) is provided for measuring the moisture content of the air flowing into the heat exchanger (15, 35), and **in that** the moisture sensor (26, 44) is connected to an input of the controller (21, 33).

14. HVAC system according to one of Claims 8-13, **characterized in that** a flowmeter (18) is provided, which flowmeter is incorporated into an inflow branch line (13) or return branch line (14) leading to the primary side of the heat exchanger (15), and **in that** the flowmeter (18) is connected to an input of the controller (21).

15. HVAC system (40) according to Claim 8, **characterized in that** a plurality of heat exchangers (35) are arranged in a plurality of consumer circuits (34a-e), **in that** the consumer circuits (34a-e) are supplied with energy from the central heating/cooling system or energy generator (31) by means of a distributor (32), **in that** the controller (33) includes a demand regulator, and **in that** the controller (33) is connected to the energy generator (31) and to the distributor (32) via control lines (41, 42) .

**Revendications**

1. Procédé de fonctionnement d'un échangeur de chaleur (15), lequel échangeur de chaleur (15) est traversé sur un côté primaire par un milieu caloporteur qui entre dans l'échangeur de chaleur (15) à une première température (T1, $T^W_{entrée}$ ) et qui sort de l'échangeur de chaleur (15) à une deuxième température (T2, $T^W_{sortie}$ ), et émet sur un côté secondaire, en cas chauffage, un flux de chaleur ($\dot{Q}$) à un milieu secondaire s'écoulant à travers l'échangeur de chaleur (15) ou absorbe, en cas de refroidissement, un flux de chaleur ($\dot{Q}$) provenant du milieu secondaire qui entre dans l'échangeur de chaleur (15) à une troisième température (T3, $T^L_{entrée}$ ) et qui ressort de l'échangeur de chaleur (15) à une quatrième température (T4, $T^L_{sortie}$ ), l'échangeur de chaleur (15) pouvant transférer un flux de chaleur maximal ($\dot{Q}_{max}$), au moins trois des quatre températures (T1 à T4, $T^W_{entrée}$, $T^W_{sortie}$, $T^L_{entrée}$, $T^L_{sortie}$ ) étant mesurées, **caractérisé en ce que** le degré de saturation $(\frac{\dot{Q}}{\dot{Q}_{max}})$ respectif de l'échangeur de chaleur (15) est déterminé à partir de ces températures mesurées et est utilisé pour commander le fonctionnement de l'échangeur de chaleur (15), et **en ce que** l'échangeur de chaleur (15) fait partie d'une installation HVAC (10), le flux de milieu caloporteur du côté primaire de l'échangeur de chaleur (15) étant limité si le degré de saturation $(\frac{\dot{Q}}{\dot{Q}_{max}})$ de l'échangeur de chaleur (15) atteint une valeur spécifiée, ou le degré de saturation $(\frac{\dot{Q}}{\dot{Q}_{max}})$ de l'échangeur de chaleur (15) étant utilisé pour commander le flux de milieu secondaire ou la température aller (T1, $T^W_{entrée}$ ) du milieu caloporteur étant augmentée si le degré de saturation de l'échangeur de chaleur (15) atteint une valeur spécifiée.

2. Procédé selon la revendication 1, **caractérisé en ce que** le milieu caloporteur est de l'eau.

3. Procédé selon l'une des revendications 1 ou 2, **caractérisé en ce que** le milieu secondaire est de l'air.

4. Procédé selon l'une des revendications 1 à 3, **caractérisé en ce que** les première, deuxième, troisième ou quatrième températures (T1, T2, T3 ou T4 ; $T^W_{entrée}$, $T^W_{sortie}$, $T^L_{entrée}$ ou $T^L_{sortie}$) sont mesurées, et **en ce qu'**une fonction du type $\frac{\dot{Q}}{\dot{Q}_{max}} = f(T1, T2, T3, T4)$ ou $\frac{\dot{Q}}{\dot{Q}_{max}} = f(T^W_{entrée}, T^W_{sortie}, T^L_{entrée/sortie})$

est utilisée pour déterminer le degré de saturation $(\frac{\dot{Q}}{\dot{Q}_{max}})$ de l'échangeur de chaleur (15).

5. Procédé selon la revendication 4, **caractérisé en ce que** l'échangeur de chaleur est utilisé à contre-courant, et **en ce que** la fonction $\frac{\dot{Q}}{\dot{Q}_{max}} = 1 - \frac{1}{2} \cdot \frac{T1-T2}{T1-T3}$ ou $\frac{\dot{Q}}{\dot{Q}_{max}} = 1 - \frac{1}{2} \cdot \frac{T^W_{entrée} - T^W_{sortie}}{T^W_{entrée} - T^L_{entrée}}$ est utilisée pour déterminer le degré de saturation $(\frac{\dot{Q}}{\dot{Q}_{max}})$ de l'échangeur de chaleur (15).

6. Procédé selon la revendication 4, **caractérisé en ce que** l'échangeur de chaleur est utilisé à contre-courant, et **en ce que** la fonction $\frac{\dot{Q}}{\dot{Q}_{max}} = 1 - \frac{n}{2 \cdot (\Theta + n \cdot (1-\Theta))} \cdot \frac{T1-T2}{T1-T3}$ ou

$\frac{\dot{Q}}{\dot{Q}_{max}} = 1 - \frac{n}{2 \cdot (\Theta + n \cdot (1-\Theta))} \cdot \frac{T^W_{entrée} - T^W_{sortie}}{T^W_{entrée} - T^L_{entrée}}$ est utilisée pour déterminer le degré de saturation $(\frac{\dot{Q}}{\dot{Q}_{max}})$ de

l'échangeur de chaleur (15), n désignant une puissance s'écartant de la valeur 1 et $\Theta$ étant une constante qui a notamment la valeur 0,7.

7. Procédé selon la revendication 2, **caractérisé en ce que**, en cas de refroidissement, la teneur en humidité de l'air est en plus mesurée à l'entrée dans l'échangeur de chaleur (15), et **en ce que** le degré de saturation $(\frac{\dot{Q}}{\dot{Q}_{max}})$ de

l'échangeur de chaleur (15), déterminé à partir des températures (T1, T2, T3 ou T4 ; $T^W_{entrée}$, $T^W_{sortie}$, $T^L_{entrée}$

ou $T^L_{sortie}$), est corrigé de façon correspondant pour tenir compte d'une condensation se produisant dans l'échangeur de chaleur (15).

8. Installation HVAC (10, 30, 40) destinée à mettre en œuvre le procédé selon l'une des revendications 1 à 7, l'installation comprenant au moins un échangeur de chaleur (15, 35) qui est raccordé du côté primaire à une conduite aller (11) et à une conduite retour (12) d'un système de chauffage/refroidissement central (31) fonctionnant avec un milieu caloporteur et qui est traversé par un milieu secondaire du côté secondaire, comprenant en plus un moyen de commande (17, 29, 45, 46) destiné à commander le débit massique du côté primaire du milieu caloporteur et/ou du flux secondaire, et un premier capteur de température (19, 43a) destiné à mesurer la température aller (T1,

$T^W_{entrée}$) du milieu caloporteur entrant dans de l'échangeur de chaleur (15, 35), un deuxième capteur de température (20, 43b) destiné à mesurer la température de sortie (T2, $T^W_{sortie}$) du milieu caloporteur sortant de l'échangeur de chaleur (15, 35) et une commande (21, 33) à laquelle le premier et le deuxième capteur de température (19, 20, 43a, 43b) sont raccordés du côté entrée et qui est reliée du côté sortie au moyen de commande (17, 29, 45, 46), **caractérisé en ce qu'**au moins un troisième capteur de température (22, 27, 43c, 43d) est prévu pour mesurer la température d'entrée (T3, $T^L_{entrée}$) et/ou la température de sortie (T4, $T^L_{sortie}$) du milieu secondaire entrant du côté secondaire dans l'échangeur de chaleur (15, 35), **en ce que** le troisième capteur de température (22, 27, 43c, 43d) est raccordé à une entrée de la commande (21, 33), et **en ce que** la commande (21, 33) est conçue de manière à commander le moyen de commande (17, 29, 45, 46) conformément aux valeurs de température mesurées par les au moins trois capteurs de température (19, 20, 22 et 27 ; 43a-d).

9. Installation HVAC selon la revendication 8, **caractérisée en ce qu'**un consommateur (36) est raccordé à l'échangeur de chaleur (15, 35) du côté secondaire, et en que la commande (33) reçoit des signaux de demande du consommateur (36) par le biais d'une ligne de signal de demande (38).

**10.** Installation HVAC selon la revendication 8 ou 9, **caractérisée en ce que** le milieu caloporteur est de l'eau et le milieu secondaire est de l'air.

**11.** Installation HVAC selon l'une des revendications 8 à 10, **caractérisée en ce que** le moyen de commande est une vanne de régulation (17) qui est incorporée dans une ligne de branchement aller (13) ou ligne de branchement retour (14) menant au côté primaire de l'échangeur de chaleur (15).

**12.** Installation HVAC selon la revendication 10, **caractérisée en ce que** le moyen de commande est un souffleur (29) qui est incorporé dans un conduit d'air (28) menant au côté secondaire de l'échangeur de chaleur (15).

**13.** Installation HVAC selon la revendication 10, **caractérisée en ce qu'**un capteur d'humidité (26, 44) est prévue pour mesurer la teneur en humidité de l'air entrant dans l'échangeur de chaleur (15, 35), et **en ce que** le capteur d'humidité (26, 44) est raccordé à une entrée de la commande (21, 33).

**14.** Système HVAC selon l'une des revendications 8 à 13, **caractérisé en ce qu'**un débitmètre (18) est prévu qui est incorporé dans une ligne de branchement aller (13) ou une ligne de branchement retour (14) menant au côté primaire de l'échangeur de chaleur (15), et **en ce que** le débitmètre (18) est raccordé à une entrée de la commande (21).

**15.** Installation HVAC (40) selon la revendication 8, **caractérisée en ce qu'**une pluralité d'échangeurs de chaleur (35) sont disposés dans une pluralité de circuits consommateurs (34a-e), **en ce que** les circuits consommateurs (34a-e) sont alimentés en énergie par le système de chauffage/refroidissement central ou le générateur d'énergie (31) par le biais d'un distributeur (32), **en ce que** la commande (33) comprend une régulation de la demande, et **en ce que** la commande (33) est reliée au générateur d'énergie (31) et au distributeur (32) par le biais de lignes de commande (41, 42).

**Fig.1**

Prior
Art

RTS

**Fig.2**

$$\frac{\dot{Q}}{\dot{Q}_{max}} \cong 0,8$$

**Fig.3**

**Fig.4**

**Fig.5**

**Fig.6**

*Fig.7*

**Fig.8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0035085 A1
- US 2009090498 A1

- US 7377450 B2